(19) Europäisches Patentamt
European Patent Office
Office européen des brevets

(11) Numéro de publication: **0 068 939**
**A1**

(12) **DEMANDE DE BREVET EUROPEEN**

(21) Numéro de dépôt: **82401014.4**

(22) Date de dépôt: **04.06.82**

(51) Int. Cl.³: **G 02 F 1/13**, G 02 F 1/133

(30) Priorité: **10.06.81 FR 8111394**

(43) Date de publication de la demande: **05.01.83**
**Bulletin 83/1**

(84) Etats contractants désignés: **DE IT NL SE**

(71) Demandeur: **THOMSON-CSF, 173, Boulevard Haussmann, F-75379 Paris Cedex 08 (FR)**

(72) Inventeur: **Le Berre, Serge, THOMSON-CSF SCPI 173, bld. Haussmann, F-75379 Paris Cedex 08 (FR)**
Inventeur: **Hareng, Michel, THOMSON-CSF SCPI 173, bld. Haussmann, F-75379 Paris Cedex 08 (FR)**

(74) Mandataire: **Wang, Pierre et al, THOMSON-CSF SCPI 173, Bld Haussmann, F-75379 Paris Cedex 08 (FR)**

(54) **Dispositif d'affichage à cristal liquide associant deux modes d'adressage.**

(57) La présente invention se rapporte aux cellules utilisant un film de cristal liquide (1) en phase smectique.

L'invention a pour objet de réaliser dans une même cellule deux modes d'adressage: un adressage optique par faisceau laser et un adressage matriciel par électrodes chauffantes (4).

L'invention s'applique notamment à la visualisation d'une image tout en donnant des données numériques ou des indications relatives à cette image.

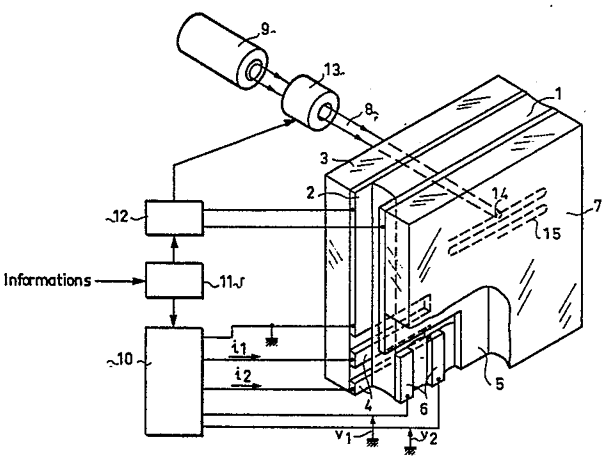


EP 0 068 939 A1

# DISPOSITIF D'AFFICHAGE A CRISTAL LIQUIDE ASSOCIANT DEUX MODES D'ADRESSAGE.

La présente invention concerne les cellules à cristal liquide, et plus particulièrement celles utilisant un cristal liquide en phase smectique à des fins d'affichage d'images ou de motifs. Elle se rapporte plus particulièrement aux dispositifs mettant en oeuvre deux modes d'adressage : l'adressage optique par faisceau laser et l'adressage matriciel par électrodes chauffantes.

Il appartient à l'art connu d'utiliser l'effet thermo-optique dans les cristaux liquides de phase smectique pour le stockage et l'affichage d'informations. Cet effet a en particulier été utilisé dans une valve optique à adressage laser pour la réalisation d'un affichage par projection de haute résolution. Un écran comportant 2000 x 2000 points de résolution est aisément réalisable. La dimension typique du point est alors de 20 microns. Pour effacer l'image enregistrée, il est possible soit de balayer la cellule avec le faisceau lumineux à pleine intensité et de refroidir ensuite lentement la couche, soit de soumettre la couche à un champ alternatif avec ou sans balayage par faisceau. Le problème de ce type d'affichage est cependant, pour quelques applications, sa vitesse d'inscription : de l'ordre de quelques $10^4$ points par seconde.

Il appartient également à l'art connu d'utiliser un adressage matriciel permettant l'affichage d'informations à cadence télévision et ce avec des réseaux d'électrodes dont les pas sont typiquement de 20 à 100 microns. Cette méthode nécessite cependant pour les matériaux mésomorphes en phase smectique le chauffage de la couche de cristal liquide par exemple, par effet Joule en faisant circuler un courant électrique dans des éléments résistifs en forme de bandes.

La présente invention propose de combiner ces deux types d'affichage pour répondre au problème souvent posé d'un affichage haute résolution et cadence de renouvellement lente à modérée (quelques secondes par exemple) pouvant en plus permettre la visualisation à cadence rapide d'informations plus élémentaires. Ce sera généralement l'affichage de quelques caractères alphanumériques dans un des coins de l'écran (défilement d'un compteur, d'un

index, de l'heure, etc...). Le dispositif proposé est notamment destiné à être observé en réflexion et projection sur un écran. Le matériau mésomorphe peut également contenir des particules dispersées ayant un effet modulateur sur le rayonnement de lecture de la cellule.

L'invention a pour objet un dispositif d'affichage de données comportant une couche de matériau mésomorphe présentant une phase smectique et des moyens permettant de modifier les propriétés optiques de ladite couche sous l'influence de signaux électriques représentatifs desdites données ; ladite couche étant disposée entre des électrodes ; caractérisé en ce que l'une desdites électrodes comporte une première plage continue et une deuxième plage formée de bandes chauffantes parallèles ; les autres électrodes comportant en vis-à-vis de ladite première plage une électrode continue et en vis-à-vis de ladite seconde plage un réseau de bandes conductrices croisant lesdites bandes chauffantes ; l'ensemble formé par ladite couche de cristal liquide et lesdites électrodes étant enserré entre deux lames dont l'une au moins est transparente.

D'autres aspects et avantages de l'invention seront mieux compris à l'aide de la description ci-après fournie à titre d'exemple non limitatif, ainsi que de la figure annexée qui représente une vue d'une cellule suivant l'invention et son système d'adressage. Dans cette figure une coupe a été faite pour montrer plus clairement certains détails de l'invention. Seulement deux lignes et deux colonnes ont été représentées pour ne pas surcharger la figure.

Dans cet exemple le cristal liquide utilisé présente une phase smectique A, c'est-à-dire que les longues molécules qui constituent le matériau mésomorphe sont perpendiculaires au plan des couches. Cet alignement a été facilité par un traitement adéquat des parois. Le cristal est donc transparent à l'état de repos. La couche de cristal liquide 1 est enserrée entre deux supports 3 et 7 munis d'électrodes. Une première électrode 2 en aluminium déposée sur un substrat de verre 3 préalablement recouvert d'un traitement multicouches non représenté, comprend une plage continue réservée au mode d'adressage par laser et dans une découpe de cette plage un jeu de dents 4 affectées au mode d'adressage matriciel.

Le support 7 est porteur d'une deuxième électrode composée d'une plage continue 5 ayant la même morphologie que la plage continue de l'électrode 2.

La plage 5 est agencée face à l'autre plage continue comme le montre la figure. Le support 7 est également porteur d'un réseau de bandes conductrices 6 agencées dans une découpe de l'électrode 5 ; ces bandes conductrices 6 formant avec l'électrode 5 un ensemble d'électrodes isolées. Le réseau 6 de bandes coplanaires est orienté de telle façon qu'il recouvre le réseau de dents 4, chaque dent faisant face à toutes les bandes du réseau 6. Cette disposition qui peut être orthogonale forme un ensemble de croisements permettant de réaliser un adressage électrique matriciel de la couche 1. Les électrodes portées par l'un au moins des supports 3 et 7 sont formées d'un matériau transparent. Par exemple il peut s'agir de dépôts d'oxyde d'étain ou d'indium ou d'un mélange de ces deux oxydes (électrode ITO). Le support 7 peut être confectionné comme le support 3. Le traitement multicouches mentionné plus haut est destiné à adapter l'indice du support 3 ou 7 à celui de l'aluminium afin d'assurer avec le minimum de réflexion le transfert du rayonnement lumineux à la couche métallique lors d'un adressage par laser. On sait en effet que l'énergie transportée par ce rayonnement sert à échauffer la couche de cristal liquide. Il est possible alors d'adresser la couche de cristal liquide dans un premier secteur délimité par l'étendue des plages continues des électrodes 2 et 5 au moyen d'un faisceau laser 8 fourni par un laser 9.

A titre d'exemple non limitatif le laser 9 peut être un laser semiconducteur à l'arséniure de gallium ou un laser à milieu actif solide de type YAG.

Un second secteur de la couche de cristal liquide compris entre les bandes conductrices 6 et les dents 4 est soumis à un adressage matriciel par électrodes chauffantes. Les dents 4 sont agencées en réseau par exemple au pas de 20 microns afin d'obtenir la même résolution que sur la partie de l'écran disposant d'un affichage par faisceau laser. L'électrode 2 étant mise à la masse, les dents 4 qui dans cet exemple sont les lignes du réseau matriciel, ont une de leur extrémité à la masse. Un dispositif électronique 10 délivre des tensions de chauffage pour chaque dent 4, afin de porter le

cristal liquide en regard à la température permettant d'exploiter l'effet thermo-optique lors du refroissement faisant suite à l'échauffement. On sait que l'effet thermo-optique peut s'appliquer de deux façons différentes selon que les données à afficher influencent l'intensité du faisceau 8 ou la valeur d'un champ électrique induit dans la couche de cristal liquide 1 par les électrodes 2 et 5.

Dans un but de simplification on ne décrira ici que le cas où l'intensité du faisceau 8 est constante, étant entendu que l'autre mode de fonctionnement est également compris dans le cadre de l'invention.

La figure annexée montre également le dispositif commandant les deux modes d'adressage de la cellule. Les données à afficher se présentent sous la forme de signaux électriques appliqués à l'entrée d'un circuit d'aiguillage 11 qui les distribue suivant leur mode d'affichage, soit vers l'entrée d'un circuit de commande de déviation 12, soit vers l'entrée d'un circuit de commande 10. Le circuit 12 commande un déviateur optique 13 destiné à balayer la plage continue au moyen du spot 14 produit par l'impact du faisceau 8. Le spot 14 peut décrire une trame de balayage représentée sur la figure par la trace en pointillé 15. Le circuit 12 alimente les électrodes 2 et 5 de manière à induire simultanément un champ électrique dans la couche de cristal liquide. Ce champ électrique dont l'intensité est fonction de la donnée à afficher coopère avec le balayage du faisceau pour réaliser en chaque point de la couche de cristal liquide l'état de diffusion désiré.

Selon l'invention, le mode d'affichage qui vient d'être décrit est complété par un affichage matriciel réalisé par le circuit de commande 10. A cet effet il délivre des courants de chauffage ($i_1$,$i_2$) aux dents 4 et des tensions électriques ($v_1$,$v_2$) aux bandes 6. De façon plus précise, le circuit de commande 10 regroupe les fonctions suivantes :

- il assure le chauffage des lignes qui sont portées successivement au potentiel nécessaire pour provoquer l'échauffement du cristal liquide,
- il conserve dans une mémoire tampon les tensions vidéo qui sont à appliquer par l'intermédiaire des bandes 6 au cours de la phase de refroidissement du cristal liquide afin d'obtenir l'état de diffusion désiré.

L'effacement des données inscrites dans le secteur à affichage par laser peut se faire au choix globalement ou localement. Pour un effacement local, un procédé avantageux consiste à appliquer entre les électrodes 2 et 5 une tension alternative d'effacement.

Un des principaux intérêts du dispositif selon l'invention est la simplicité de réalisation. En effet, la couche de cristal liquide utilisé pour les deux modes d'affichage est la même. A titre d'exemple non limitatif on peut citer le cyano-octyl-biphényl (8CB) de formule :

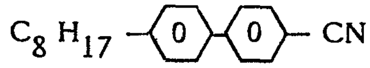

dont les transitions de phase sont :

$$K \xrightarrow{20°} SA \xrightarrow{32°} N \xrightarrow{40°} I$$

Ceci dit on voit qu'il a été possible de réaliser d'un seul tenant l'électrode 2 mise à la masse, celle-ci ayant un rôle à jouer dans les deux modes d'adressage. Cette intégration des deux modes d'affichage n'entraîne aucune complication d'ordre technologique et en particulier il n'est pas du tout nécessaire de scinder en deux plages isolées la couche de cristal liquide.

En cas de coupure momentanée des alimentations du secteur à adressage matriciel, celui-ci présente le phénomène de mémoire. Ceci est un avantage bien connu des cristaux liquides en phase smectique.

## REVENDICATIONS

1. Dispositif d'affichage de données comportant une couche de cristal liquide (1) présentant une phase smectique et des moyens permettant de modifier les propriétés optiques de ladite couche sous l'influence de signaux électriques représentatifs desdites données ; ladite couche étant disposée entre des électrodes ; caractérisé en ce qu'une première électrode comporte une première plage continue (2) et une deuxième plage formée de dents parallèles (4) ; les autres électrodes comportant en vis-à-vis de ladite première plage une électrode continue (5) et en vis-à-vis de ladite seconde plage un réseau de bandes conductrices (6) croisant lesdites dents(4) ; l'ensemble formé par ladite couche de cristal liquide et lesdites électrodes étant enserré entre deux lames (3 et 7) dont l'une au moins est transparente.

2. Dispositif selon la revendication 1, caractérisé en ce que lesdites électrodes sont soumises à une tension électrique coopérant dans un cycle d'échauffement et de refroidissement de façon à contrôler lesdites propriétés optiques ; l'échauffement étant produit par des moyens d'échauffement électriques reliés auxdites dents et par des moyens d'échauffement optiques explorant l'une desdites électrodes dans l'étendue de ladite plage continue.

3. Dispositif selon l'une des revendications 1 ou 2, caractérisé en ce que au moins une desdites électrodes est transparente.

4. Dispositif selon la revendication 1, caractérisé en ce que lesdits moyens comprennent un traitement des surfaces en contact avec ladite couche pour favoriser une orientation préférentielle des molécules de ladite couche.

5. Dispositif selon la revendication 1, caractérisé en ce qu'un traitement multicouches permet d'adapter l'indice d'une desdites lames transparentes à celui de l'électrode qu'elle porte.

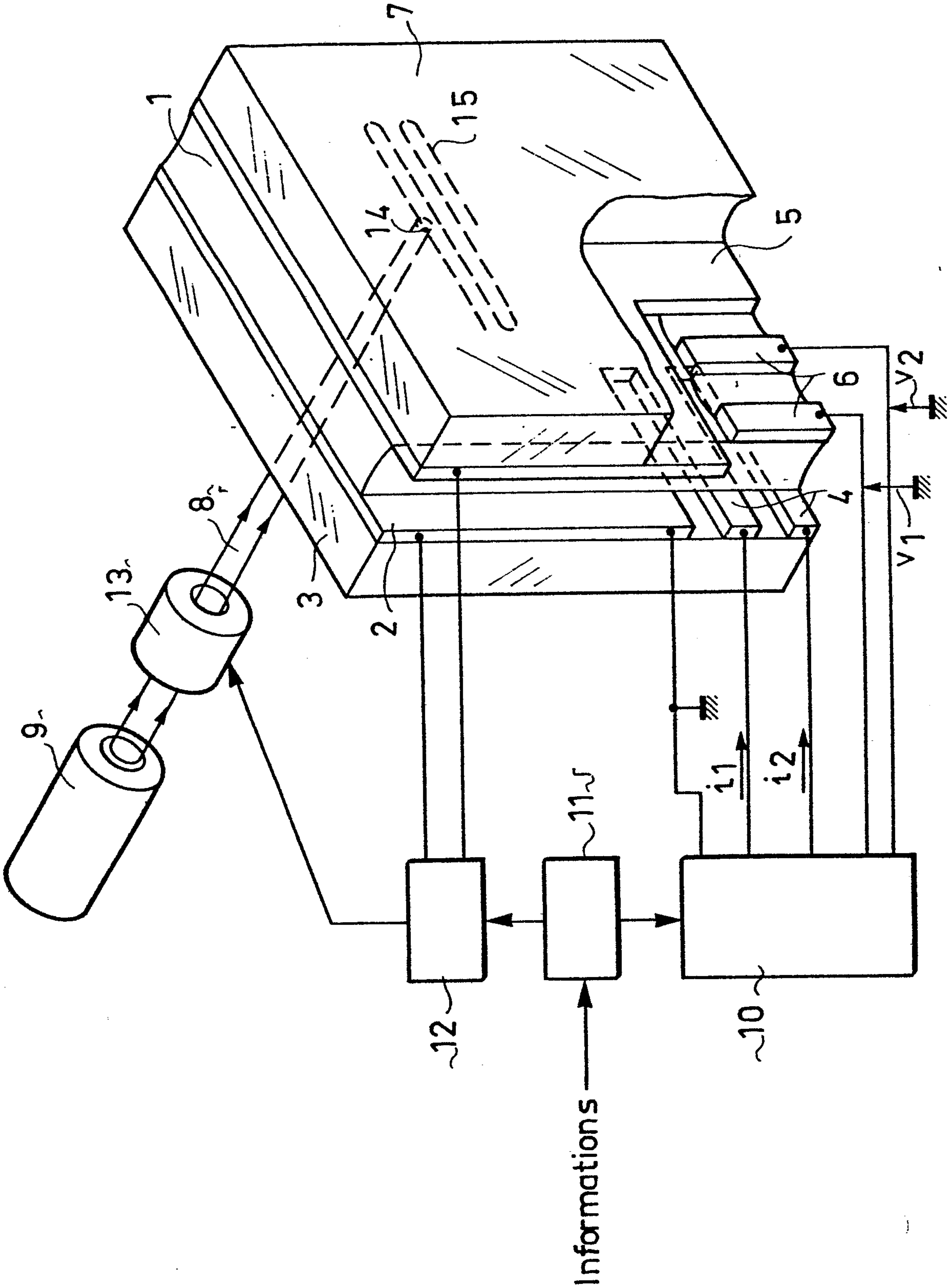

1
2
3
4
5
6
7
8
9
10
11
12
13
14
15
$V_1$
$V_2$
$i_1$
$i_2$
Informations

0068939

Office européen des brevets

# RAPPORT DE RECHERCHE EUROPEENNE

Numéro de la demande

EP 82 40 1014

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | FR-A-2 389 955 (THOMSON-CSF) * page 2, ligne 22 à page 3, ligne 11; page 4, lignes 21-30; figure 1 * --- | 1-3 | G 02 F 1/13<br>G 02 F 1/133 |
| Y | FR-A-2 275 087 (THOMSON-CSF) * page 5, ligne 23 à page 6, ligne 7; figure 2 * --- | 1-3 | |
| A | * page 5, lignes 27-34 * --- | 4 | |
| Y | US-A-4 270 846 (M. MIYAMOTO et al.) * abrégé; figures 2-6 * --- | 1 | |
| A | APPLIED PHYSICS LETTERS, vol.22, no.3, 1er février 1973, New York (US) F.J. KAHN: "Ir-laser-addressed thermo-optic smectic liquid-crystal storage displays", pages 111-113 * page 111, colonne 1, ligne 26 à colonne 2, ligne 3 * --- | 1,4 | DOMAINES TECHNIQUES RECHERCHES (Int. Cl. 3)<br>G 02 F 1/13<br>G 02 F 1/133 |

-/-

Le présent rapport de recherche a été établi pour toutes les revendications

| Lieu de la recherche | Date d'achèvement de la recherche | Examinateur |
|---|---|---|
| LA HAYE | 15-09-1982 | GALANTI M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

0068939

Office européen des brevets

# RAPPORT DE RECHERCHE EUROPEENNE

Numéro de la demande

EP 82 40 1014



## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | IBM TECHNICAL DISCLOSURE BULLETIN, vol.18, no.11, avril 1976, New York (US) E.A. CUNNINGHAM et al.: "Absorbing films for reflective laser beam addressed, thermally activated liquid crystal cell", page 3776 * en entier * ----- | 1,5 | |
| | | | DOMAINES TECHNIQUES RECHERCHES (Int. Cl. 3) |

Le présent rapport de recherche a été établi pour toutes les revendications

| Lieu de la recherche | Date d'achèvement de la recherche | Examinateur |
|---|---|---|
| LA HAYE | 15-09-1982 | GALANTI M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82